# FASCICULE DE BREVET EUROPEEN

(11) **EP 0 857 426 B1**
(45) Date de publication et mention de la délivrance du brevet: **02.05.2002**
(21) Numéro de dépôt: 98102201.5
(22) Date de dépôt: 09.02.1998
(51) Int. Cl.: A23L 1/00, A23L 1/10, A23L 1/305, A23J 3/34, A23L 1/0522, A23C 9/20

(54) **Bouillie hypoallergénique prête à l'emploi et son procédé de fabrication**
Hypoallergenischer Instantbrei und Verfahren zur Herstellung
Hypoallergenic instant porridge and production process thereof

(30) Priorité: 10.02.1997 EP 97200372
(43) Date de publication de la demande: 12.08.1998
(73) Titulaire: SOCIETE DES PRODUITS NESTLE S.A., 1800 Vevey (CH)
(72) Inventeur: Kuehner, Holger, 84453 Muehldorp am Inn (DE); Mueller, Axel, 82054 Sauerlach (DE)
(74) Mandataire: Thomas, Alain

(56) Documents cités:
- EP-A- 0 322 589
- EP-A- 0 353 122
- DE-A- 3 737 442
- DATABASE WPI Section Ch, Week 8743 Derwent Publications Ltd., London, GB; Class A92, AN 87-304251 XP002034073 & JP 62 215 352 A (WAKODO KK) , 22 septembre 1987

## Description

La présente invention concerne une bouillie hypoallergénique prête à l'emploi et stérilisée, ainsi que son procédé de fabrication.

Il est connu dans l'état de la technique que certaines protéines du petit lait comme l'α-lactalbumine et surtout la β-lactoglobuline sont allergéniques. Il existe sur le marché des petits laits hypoallergéniques, c'est-à-dire dans lesquels on a dégradé les protéines mentionnées ci-dessus. Par contre, il n'existe absolument pas sur le marché une bouillie hypoallergénique prête à l'emploi : il serait très intéressant de disposer d'une telle bouillie pour des raisons de commodité pour les mères.

Le but de la présente invention est de mettre au point une bouillie hypoallergénique prête à l'emploi, ayant une texture et viscosité conforme à celle d'une bouillie, et avec laquelle on minimise l'apport de protéines allergéniques.

La présente invention concerne une bouillie hypoallergénique prête à l'emploi et stérilisée ayant une teneur en matière sèche comprise entre 15 et 30 %, comprenant sur la base de la composition totale au moins 1,5 % de protéines, entre 0 et 10 % d'amidon chimiquement modifié et/ou entre 0 et 10 % d'amidon natif, au moins 4 % de sucre, au moins 1 % de graisse, la teneur totale en amidon étant d'au moins 2 %. La teneur totale en amidon est de préférence comprise entre 5 et 10 %.

Il est également possible d'ajouter dans la bouillie des vitamines, des sels minéraux, des arômes et des fruits ou des poudres de fruit. La teneur globale dans ces composants est de l'ordre de 5 %. Dans la présente description, tous les pourcentages sont donnés en poids.

Le terme allergénique est à comprendre comme "protéine ou macropeptide susceptible de déclencher des réactions allergiques chez des sujets, notamment des petits enfants ou des nourissons sensibles". On considère qu'une bouillie est hypoallergénique lorsqu'on ne peut plus déceler la présence de protéines ou de gros fragments ou macropeptides de poids moléculaire supérieur à environ 10000 provenant du lait par les méthodes analytiques habituelles, par exemple par chromatographie liquide haute performance (HPLC), par electrophorèse de zone en gel de polyacrylamide (SDS-PAGE) ou, lorsque ces méthodes ne permettent plus de mettre en évidence des antigènes protéiques ou macropeptidiques, par des méthodes immunologiques, par exemple par double immunodiffusion (ID).

Les protéines présentes dans la bouillie selon l'invention sont principalement apportées par de la poudre de lait hypoallergénique, la poudre de soja ou autre. La teneur en protéines est de préférence comprise entre 1,5 et 6 %. La teneur en graisse de la bouillie est également apportée par le lait hypoallergénique. On peut également rajouter de la graisse, par exemple de la graisse végétale.

Par lait hypoallergénique, on entend du lait entier ou partiellement ou totalement écrémé, ainsi que de la poudre de lait entier, partiellement ou totalement écrémé. On peut également utiliser de la poudre de petit lait ou de la poudre de caséine. On utilise de préférence du petit lait déminéralisé hydrolysé à la trypsine et standardisé avec de la maltodextrine, graisse végétale et sels minéraux et séché par atomisation. On peut par exemple considérer le produit obtenu par le procédé, objet du brevet EP 322'589 au nom de la demanderesse. Ce produit peut être sous la forme de poudre à base de sérum doux, soit à base de sérum acide.

La bouillie prête à l'emploi selon l'invention a une viscosité supérieure à 1500 mPas, de préférence entre 2200 et 3000 mPas (mesures effectuées à 25 °C avec un taux de cisaillement de 64 sec.-1, lesdites mesures étant faites avec un appareil HAAKE, RS 100/cone plate ). La bouillie constitue un produit homogène, avec une texture lisse en bouche et qui a la consistance dans la gamme de viscosité précitée. Cette viscosité est obtenue avec une teneur en matière sèche comprise entre 15 et 30 %.

Par amidon chimiquement modifié, on entend un amidon ayant subi un traitement chimique,par exemple une acylation ou toute autre modification chimique appropriée pour augmenter la stabilité de l'amidon en cas de sollicitation mécanique.

Les amidons chimiquement modifiés utilisables sont choisis dans le groupe constitué par l'amidon de tapioca, l'amidon de pomme de terre, l'amidon de riz partiellement hydrolysé, l'amidon de maïs , l'amidon de blé La teneur dans ces amidons est de préférence de l'ordre de 5 %. La raison de l'hydrolyse partielle des deux derniers amidons cités est que normalement ils contiennent trop de protéines allergéniques et qu'il faut donc procéder avant leur introduction dans la bouillie à la dégradation desdites protéines allergéniques.

L'amidon natif est choisi dans le groupe constitué par l'amidon de tapioca, l'amidon de pomme de terre, l'amidon de riz et l'amidon de maïs, l'amidon de blé. Cet amidon natif peut se présenter aussi sous forme de farine.

Il serait possible de diminuer la teneur en amidon chimiquement modifié et d'augmenter celle en amidon natif. Si on diminue la teneur en amidon chimiquement modifié, il faut augmenter dans une plus forte proportion la teneur en amidon natif.

Le sucre utilisé est choisi dans le groupe constitué par le glucose, le lactose et le sucrose et des maltodextrines.Le glucose et le sucrose sont ajoutés dans la composition, par contre le lactose est présent dans le lait hypoallergénique utilisé. La teneur en sucres est normalement comprise entre 5,5 et 15 %, celle de lactose entre 4 et 7 %.

Dans une forme de réalisation préférée, la bouillie selon l'invention contient environ 80 % d'eau, environ 2-3 % de protéines, environ 5 % d'amidon de tapioca chimiquement modifié, environ 2 % d'amidon de tapioca natif, environ 8 % de sucre, au moins 2 % de graisse, environ 0,7 % d'arômes et le reste étant des vitamines et des sels minéraux.

L'invention concerne également le procédé de fabrication de cette bouillie. Selon ce procédé, on mélange le lait hypoallergénique avec l'amidon chimiquement modifié et éventuellement l'amidon natif, le sucre, la graisse et éventuellement les autres ingrédients avec l'eau, on chauffe à une température de l'ordre de 60-70 °C, on fait une désaération à cette température, on effectue une upérisation à une température comprise entre 135 et 145 °C pendant une durée comprise entre 90 et 10 sec., on refroidit et on effectue le remplissage.

Il est nécessaire de faire un pré-chauffage à une température inférieure à environ 75 °C, car il faut absolument éviter que le ou les amidons présents dans le mélange ne gélatinisent. Lorsque le mélange a passé l'étape d'upérisation, il reste bien pompable et peut être amené pour la phase de remplissage.

Le remplissage est effectué soit sur une machine de remplissage aseptique, soit sur une machine de remplissage classique, auquel cas il faut alors faire une stérilisation finale du produit pendant 3 à 5 min.

La bouillie selon l'invention est normalement conditionnée dans des pots en verre avec un couvercle métallique et ils peuvent être conservés pendant environ 9 mois.

Il est donc possible selon l'invention de préparer une bouillie hypoallergénique de bonne texture et viscosité grâce à la présence d'amidon spécifique n'introduisant pas de protéine allergénique dans ladite bouillie et avec une bonne qualité organoleptique, grâce à une stérilisation ménagée.

La suite de la description est faite en référence aux exemples.

### Exemple 1

On effectue le mélange des composés mentionnés dans le tableau ci-dessous:

| | |
|---|---|
| Lait hypoallergénique | 8 % |
| Graisse | 0,9 % |
| Amidon de tapioca chimiquement modifié | 5 % |
| Amidon de tapioca natif | 1,8 % |
| Lactose | 2,1 % |
| Fructose | 0,9 % |
| Sels minéraux et vitamines | 0,5 % |
| Extrait de vanille | 0,7 % |
| Eau | 80,1 |

Le lait hypoallergénique se compose de 25 % de protéines, 15 % de graisse, 56 % de lactose et 4 % de cendres.

On chauffe ce mélange à 68 °C, on fait une désaération à 68 °C et à 0,28 bar, on fait l'upérisation à 145 °C pendant 10 sec., on refroidit à 50 puis à 30 °C et on effectue le remplissage aseptique sur une machine Bosch dans des bocaux en verre.

### Exemple 2

On effectue le mélange des composés mentionnés dans le tableau ci-dessus à la seule différence qu'au lieu d'utiliser de l'extrait de vanille, on ajoute la même quantité d'arôme de banane.

Le procédé de fabrication reste le même que ci-dessus. On obtient une bouillie prête à l'emploi ayant une teneur en matière sèche de l'ordre de 18 %, avec un pH de 6, une viscosité comprise entre 2600 et 3200 mPas, une perte en lysine inférieure à 20 % et une lysine disponible supérieure à 4,3 g/16gN.

## Revendications

1. Bouillie hypoallergénique prête à l'emploi et stérilisée ayant une teneur en matière sèche comprise entre 15 et 30 %, comprenant sur la base de la composition totale au moins 1,5 % de protéines, entre 0 et 10 % d'amidon chimiquement modifié et/ou entre 0 et 10 % d'amidon natif, au moins 4 % de sucre et au moins 1 % de graisse, la teneur totale en amidon étant d'au moins 2 %.

2. Bouillie hypoallergénique selon la revendication 1, **caractérisée en ce que** la teneur en amidon totale est comprise entre 5 et 10 %.

3. Bouillie hypoallergénique selon la revendication 1, **caractérisée en ce que** l'amidon chimiquement modifié est choisi dans le groupe constitué par l'amidon de tapioca, l'amidon de pomme de terre, l'amidon de riz partiellement hydrolysé, l'amidon de maïs partiellement hydrolysé.

4. Bouillie hypoallergénique selon l'une des revendications 1 ou 2, **caractérisée en ce que** l'amidon natif est choisi dans le groupe constitué par l'amidon de tapioca, l'amidon de pomme de terre, l'amidon de riz partiellement hydrolysé et l'amidon de maïs partiellement hydrolysé.

5. Bouillie hypoallergénique selon l'une des revendications 1 à 3, **caractérisée en ce que** le sucre est choisi dans le groupe constitué par le glucose, le lactose, le sucrose et les maltodextrines.

6. Bouillie hypoallergénique selon l'une des revendications 1 à 4, **caractérisée en ce que** la teneur en protéines est comprise entre 1,5 et 6 %.

7. Bouillie hypoallergénique selon l'une des revendications 1 à 5, **caractérisée en ce que** la teneur en sucre est comprise entre 5,5 et 15 %.

8. Bouillie hypoallergénique selon l'une des revendications 1 à 6, **caractérisée en ce qu'**elle contient 80 % d'eau, 2-3 % de protéines, 5 % d'amidon de tapioca chimiquement modifié, 2 % d'amidon de tapioca natif, environ 8 % de sucre, au moins 2 % de graisse, 0.7 % d'arômes et le reste étant des vitamines et des sels minéraux.

9. Procédé de préparation d'une bouillie hypoallergénique selon l'une quelconque des revendications 1 à 7, dans lequel on mélange le lait hypoallergénique avec l'amidon chimiquement modifié et eventuellement l'amidon natif, le sucre, la graisse et éventuellement les autres ingrédients avec l'eau, on chauffe à une température de 68 °C, on fait une désaération à cette température, on effectue une upérisation à une température comprise entre 135 et 145 °C pendant une durée comprise entre 90 et 10 sec., on refroidit et on effectue le remplissage de façon aseptique ou conventionnelle avec stérilisation.

## Claims

1. Ready-to-use sterilized hypoallergenic porridge having a dry mater content of between 15 and 30 % comprising, based on the total composition, at least 1.5 % proteins, between 0 and 10 % chemically modified starch and/or between 0 and 10 % native starch, at least 4 % sugar and at least 1 % fats, the total starch content being at least 2 %.

2. Hypoallergenic porridge according to claim 1, **characterized in that** the total starch content lies between 5 and 10 %.

3. Hypoallergenic porridge according to claim 1, **characterized in that** the chemically modified starch is chosen from the group consisting of tapioca starch, potato starch, partially hydrolysed rice starch, and partially hydrolysed maize starch.

4. Hypoallergenic porridge according to either of claims 1 or 2, **characterized in that** the native starch is chosen from the group consisting of tapioca starch, potato starch, partially hydrolysed rice starch and partially hydrolysed maize starch.

5. Hypoallergenic porridge according to one of claims 1 to 3, **characterized in that** the sugar is chosen from the group consisting of glucose, lactose, sucrose and maltodextrins.

6. Hypoallergenic porridge according to one of claims 1 to 4, **characterized in that** the protein content lies between 1.5 and 6 %.

7. Hypoallergenic porridge according to one of claims 1 to 5, **characterized in that** the sugar content lies between 5.5 and 15 %.

8. Hypoallergenic porridge according to one of claims 1 to 6, **characterized in that** it contains 80 % water, 2-3 % proteins, 5 % chemically modified tapioca starch, 2 % native tapioca starch, 8 % sugar, at least 2 % fats and 0.7 % flavourings, the rest being vitamins and inorganic salts.

9. Method for preparing a hypoallergenic porridge according to any one of claims 1 to 7, wherein hypoallergenic milk is mixed with chemically modified starch and optionally native starch, sugar, fats and optionally other ingredients, with water, it is heated to a temperature of 68°C, de-aeration is carried out at this temperature, uperization is carried out at a temperature of between 135 and 145°C for a period of between 90 and 10 sec., the mixture is cooled and filling is carried out in an aseptic manner or conventionally with sterilization.

## Patentansprüche

1. Gebrauchsfertiger und sterilisierter hypoallergener Brei mit einem Trockenmassegehalt zwischen 15 und 30%, der, bezogen auf die Gesamtzusammensetzung, mindestens 1,5% Proteine, zwischen 0 und 10% chemisch modifizierte Stärke und/oder zwischen 0 und 10% native Stärke, mindestens 4% Zucker und mindestens 1% Fett enthält, wobei der Gesamtgehalt an Stärke mindestens 2% beträgt.

2. Hypoallergener Brei nach Anspruch 1, **dadurch gekennzeichnet, dass** der Gesamtgehalt an Stärke zwischen 5 und 10% beträgt.

3. Hypoallergener Brei nach Anspruch 1, **dadurch gekennzeichnet, dass** die chemisch modifizierte Stärke aus der Gruppe ausgewählt ist, die aus Tapiokastärke, Kartoffelstärke, partiell hydrolysierter Reisstärke und partiell hydrolysierter Maisstärke besteht.

4. Hypoallergener Brei nach einem der Ansprüche 1 oder 2, **dadurch gekennzeichnet, dass** die native Stärke aus der Gruppe ausgewählt ist, die aus Tapiokastärke, Kartoffelstärke, partiell hydrolysierter Reisstärke und partiell hydrolysierter Maisstärke besteht.

5. Hypoallergener Brei nach einem der Ansprüche 1 bis 3, **dadurch gekennzeichnet, dass** der Zucker aus der aus Glucose, Lactose, Saccharose und den Maltodextrinen bestehenden Gruppe ausgewählt ist.

6. Hypoallergener Brei nach einem der Ansprüche 1 bis 4, **dadurch gekennzeichnet, dass** der Gehalt an Proteinen zwischen 1,5 und 6% beträgt.

7. Hypoallergener Brei nach einem der Ansprüche 1 bis 5, **dadurch gekennzeichnet, dass** der Zuckergehalt zwischen 5,5 und 15% beträgt.

8. Hypoallergener Brei nach einem der Ansprüche 1 bis 6, **dadurch gekennzeichnet, dass** er 80% Wasser, 2-3% Proteine, 5% chemisch modifizierte Tapiokastärke, 2% native Tapiokastärke, 8% Zucker, mindestens 2% Fett und 0,7% Aromastoffe enthält, wobei der Rest Vitamine und Mineralsalze ist.

9. Verfahren zur Herstellung eines hypoallergenen Breis nach einem der Ansprüche 1 bis 7, bei dem man hypoallergene Milch mit chemisch modifizierter Stärke und ggf. nativer Stärke, Zucker, Fett und ggf. andere Zutaten mit Wasser mischt, auf eine Temperatur von 68°C erhitzt, bei dieser Temperatur eine Entlüftung vornimmt, bei einer Temperatur zwischen 135 und 145°C während einer Zeit zwischen 90 und 10 s eine Uperisation vornimmt, kühlt und aseptisch oder konventionell mit Sterilisation abfüllt.
